# EUROPEAN PATENT APPLICATION

(11) **EP 1 791 089 A2**
(43) Date of publication of application: **30.05.2007**
(21) Application number: 06024439.9
(22) Date of filing: 24.11.2006
(51) Int. Cl.: G06T 7/00, G06T 5/00

(54) **Method and apparatus for the graphical operation of real-time image processing systems**

(30) Priority: 28.11.2005 US 287924
(71) Applicant: Baumer Optronic GmbH, 01454 Radeberg (DE)
(72) Inventor: Beikirch, Lars, 01796 Pirna (DE); Schwarz, Dittmar, 01309 Dresden (DE); Ihlefeld, Joachim, Dr., 01097 Dresden (DE); Fedorenko, Sergej, 194355 Petersburg (RU)
(74) Representative: Herden, Andreas F.

(57) **Abstract**

The invention describes a method for configuring, on the basis of only a small number of reference images, image processing systems for the inspection of objects on the basis of geometric primitives extracted from the camera images in video real-time, by a user who is inexperienced in image processing but thinks technically-geometrically and is versed in the function of the objects to be inspected. In this case, the user's semantic knowledge is incorporated into the otherwise automatic calculation of the classifiers for the tolerant and positionally invariant recognition of the objects by virtue of the user, by means of an input device, deleting or else weighting the geometric primitives that are unsuitable for the classification selectively on the graphical interface.

## Description

Modern systems for industrial image processing contain complex, usually hardware-aided image preprocessing processors which extract the image information important for many inspection, sorting, quality inspection and recognition tasks. If these processors are incorporated in the same housing as the camera, a term that is also used is "intelligent cameras", and in English these are often also referred to as "smart vision sensors".

Most of these configuration tasks for such "intelligent cameras" comprise a learning operation, also called training operation, in which the system is shown typical error-free reference objects and so the system has to be taught the two separate tasks of:
a) recognition - tolerant in respect of position, direction of rotation, scaling, obscuration and illumination - of the objects to be inspected in the camera image, also called "object classification", and
b) carrying out the inspection tasks specific to the various objects to be inspected on the recognized objects, also called "object inspection".

Customary systems at the present time are configured by means of a graphical user interface. However, in this case extremely high requirements have nevertheless been made of the user hitherto.

The user has to set numerous decision thresholds on the basis of which the objects situated in the camera image can be separated from the background and/or from other objects situated in the image field in order to achieve - in the jargon of image processing - a successful "segmentation" of the objects from the background and the individual objects in an image from one another.

The results of this setting procedure are indeed visualized continuously on the screen, but only as highlighted image edges: the pixels of the object edge are marked in colour. The user has to be able to think in "pixels" and in greyscale values or colours in order to train the further tasks, such as, e.g. measurement of holes, of angles or the like.

Small errors when inputting these setting parameters and thresholds, small alterations of the ambient conditions, such as altered brightness of the illumination, penetration of extraneous light; altered optical reflection due to soiling of the parts to be recognized, etc., rapidly lead to a complete failure of these systems that were once set well.

These present-day intelligent cameras and image processing systems, representing the prior art, despite their leading market position, both in terms of their conception and in terms of their operation, are therefore not sufficiently error-tolerant nor can they be operated intuitively in order to be able to be used successfully by a user thinking purely in geometrical-pictorial terms. Thus, they do not satisfy the elementary requirement made of a good human-machine interface such as intuitive comprehension through obvious association with the familiar and tolerant reaction to small operating errors.

"Intelligent cameras" have recently become known which are designed in such a way that symbolic image description elements such as vectorized contours, adapted circle arcs, circles and ellipses and similar geometric primitives are extracted and visualized by means of a special processor continuously in video real-time and the customer can thus himself configure his individual inspection task without knowledge of the complex underlying image processing algorithms just at the level of a general technical-geometric shape understanding.

The real-time image processing system "VeriSens" developed by the applicant realizes this abstraction level by means of complex real-time image processing - which is hidden from the user, however - with a combination of different processors (FPGA, DSP, ...). Since the extraction of the geometric primitives manages without critical thresholds and parameters to be set by the user, this provides the technical precondition for an image processing system which demands of the user merely a simple technical-geometric shape understanding of the objects to be inspected. However, there is still a lack of a simple systematology for the configuration of these systems for different objects and different inspection tasks.

A further problem, which has not been solved despite this significant simplification achieved by extraction is the training of these image processing systems on the basis of only a small number of reference objects, that is to say from a small sample of reference objects which is inherently insufficient statistically. At the beginning of a new production of e.g. sealing rings, there is as yet little knowledge available about the production variances of the features to be inspected (variance of the diameters produced, the position of the hole centroid, the deviation from the circular form of the holes, etc.), about the fluctuations of the ambient conditions such as extraneous light interference depending on time of day, fluctuations in reflection of the seal surface to be inspected and of the background on which the seals are transported, about the different possible positions, overlaps, etc. of the seals on a conveyor belt, etc.

Therefore, it is hardly possible to use methods of automatically determining detection thresholds and object classifiers according to the rules of non-supervised learning, since all these automatic methods require a comprehensive statistical basis in order to determine significant frequency distributions, covariance matrices, comprehensive statistics of the high-dimensionally measured feature vectors, etc. and to calculate robust segmentation and classification methods automatically therefrom using the methods of pattern recognition and classification.

A further problem of these present-day systems is that the features, such as edges, corners, circular holes, suitable for the automatic position-invariant recognition of the objects which is tolerant in respect of obscuration and illumination or the mutual spatial arrangements of these features cannot be determined automatically by an image processing system when there are only a small number of reference objects. This is the case particularly when these objects in the camera image can overlap and obscure one another in almost an infinite number of possible arrangements.

The in principle powerful methods of "non-supervised learning", that is to say of automatically creating classifiers for the recognition of objects, cannot be used, therefore, for lack of a statistically sufficient number of available images of the reference objects in the different positions, mutual obscurations, different production tolerances, etc. This is immediately understandable, too, since such a sufficient number of samples should easily amount to several tens of thousands to hundreds of thousands of units in order to be statistically sufficiently significant for the methods of "non-supervised learning".

It is nevertheless demanded of an image processing system and its operator that it can be trained and set on the basis of a few reference objects that are available before series production starts, both for robust recognition of the different objects (the classification and segmentation) and for carrying out the different inspection routines assigned to the individual objects.

For a user with technical-graphical training, however, it is very simple to designate the geometric features suitable for recognition or classification directly on the basis of a drawing. He possesses the semantic knowledge about the function of these parts and thus also these geometric primitives used as features for the classification; he also knows, in the case of a new object seen for the first time, which features are robust and thus well-suited to recognition despite high production tolerance or high optical alteration, despite mutual obscuration, despite different shadow casting, etc.

The user thinking in technical-geometric terms possesses prior technical knowledge, so-called "a priori knowledge", which is absent from the automatic image processing system since programmed computers do not code the semantics (the meaning) of the parts which they register pictorially. Linking this semantic knowledge of the user into the rules of the image processing system would make it possible to create good classifiers with only a few, but in return robust, geometric shape features of these objects.

It would therefore be very advantageous and of great economic interest for broader access to automatic image processing for users if said image processing systems had an operating interface which demands of the user merely a technical-geometric mode of thinking and affords the possibility of linking the semantic knowledge of the user for the often difficult classification and segmentation tasks on the basis of a merely small sample of reference objects.

This formulated object is achieved according to the invention by virtue of the fact
that the image processing system to be configured has at least one real-time processor for extracting geometric primitives from the images of the at least one object to be inspected, said images being recorded by at least one camera,
that a small number of images of the reference objects are recorded and, not necessarily simultaneously on at least one screen, the geometric primitives extracted from the reference objects are in each case represented in a manner superposed on the camera greyscale and/or colour image of these reference objects graphically and in visually contrasting fashion,
that the user can in each case manually select, by means of an input device, the geometric primitives which to him appear unsuitable for robust recognition individually or in combination in the superposition images of these references objects,
that these primitives can optionally be combined to form individual objects, it being possible for the image processing system to offer automatically generated proposals which are generated for example by the application of neighbourhood processors for the selection of contiguous structures, by searching for parallel structures, by searching for objects with similar features, etc., and
that, from the remaining geometric primitives, the image computer calculates classifiers for the segmentation of the objects from the background and also for the mutual segmentation of the objects among one another.

In this respect, the invention provides a method for the graphical operation of an image processing system for automatic inspection and classification tasks, in which the image processing system extracts geometric shape primitives from the recorded images of the objects to be inspected and represents them in a manner superposed on the camera images, for example greyscale and/or colour images, of these objects in visually contrasting fashion by a screen, and the user in each case manually edits, by means of an input device, the selection of geometric shape primitives which to him appears unsuitable or suitable for robust recognition individually or in combination in the images of these reference objects.

A corresponding image processing system for automatic inspection and classification tasks, which is designed for carrying out the method according to the invention, in this respect comprises an image recording device, a graphical user interface and an input device for user inputs, the image processing system being set up to extract geometric shape primitives from recorded images and to represent them in a manner superposed on the camera images of these objects in visually contrasting fashion on the graphical user interface, and, by means of the graphical user interface, the user being able to manually edit geometric shape primitives individually or in combination in the images of these reference objects.

The total set of all manually selected and/or manually confirmed geometric primitives can then be combined visually and in terms of data to form a geometrical object model. On the basis of the models, the image processing system then determines the objects and the position thereof in further recordings preferably in real time.

It is also the case during the user-assisted learnig process of the image processing system, in which models of the object or objects to be inspected are created with the aid of the user, that preferably a processor performs, in video real-time, the extraction of geometric shape primitives from the recorded images of the object or objects to be inspected.

Inter alia, vectorized contour straight lines, or straight line segments, circle arcs, circles, ellipses and free-form curves are taken into consideration as geometric shape primitives.

From selected geometric primitives, the image computer, or the image processing system, can then automatically calculate classifiers for the segmentation of the objects against the background and also for the mutual segmentation of the objects among one another by an image processing computer.

If, after the acquisition of a reference image and manual editing of the geometric primitives, one or more primitives have been selected for further use and/or the remaining primitives have been deleted or deselected, then in accordance with one development of the invention, in subsequent images, there are represented in a manner superposed on the objects only those geometric primitives which the user has not yet manually deleted in the preceding reference image or reference images or has rated sufficiently highly or has selected. The user can then also progressively cause the geometric primitives that have already been deleted to be reinserted into the reference image and reverse individual deletions.

The invention additionally provides a method for the verification of at least one object model in an image processing system which may in particular follow the formation according to the invention of object models by manual selection and combination of geometric primitives, geometric shape primitives being extracted and selected from at least one recorded image, the total set of all selected geometric primitives being combined in terms of data to form a geometric object model, and the object model or object models thus formed being automatically verified by the image processor by virtue of the image processor calculating, for each object model, a measure of the stability of the primitives combined in this object model, in which case, by supplying further primitives from recordings of further specimens of these objects, the total stability of all the primitives combined in an object model is varied until it attains a maximum. This object model can then be represented visually as a reference object and be stored in terms of data. In this case, then the image processing system itself recognizes, on the basis of the stability of independently added primitives from further recordings, whether the latter are suitable for a stable object model.

A further concept of the invention is that, on the occasion of the first configuration of the real-time image processing system on the basis of only a small number of reference objects, the semantic knowledge of the user is crucially assessed for the calculation of robust classifiers and segmentation tasks, but that in the course of production and inspection in progress and the therefore continuously increasing statistical basis, the real-time system automatically calculates classification and pattern recognition methods using the known methods of "non-supervised learning", and that according to a predetermined transfer function, the classification and pattern recognition methods created from the semantic knowledge of the user at the beginning of the inspection are gradually converted into the methods determined automatically by non-supervised learning. In this respect, provision is made of a method for the classification and segmentation of objects in an image processing system, in which the image processing system extracts geometric shape primitives from recorded images and represents them in a manner superposed on the camera images of these objects in visually contrasting fashion by a screen,
and the user in each case manually edits, by means of an input device, the selection of geometric shape primitives which to him appears unsuitable or suitable for robust recognition individually or in combination in the images of these reference objects, and a plurality of objects being acquired by the image processing system and, as the number of inspected objects increases, the geometric primitives selected and/or rated by the user being included, with a weight that becomes increasingly smaller as the number of inspections carried out independently increases, in the calculation of classifiers for the recognition of the objects to be inspected, and, simultaneously with the methods of non-supervised learning, the image computer automatically determining classification rules and the latter being included, with a weight that increasingly rises as the number of inspections carried out increases, in the calculation of the classifiers for the recognition of the objects to be inspected, and the classification and segmentation of the objects being carried out by the superposition of the two classifiers.

By virtue of this automatic concomitant learning of the real-time image processing system, the advantages of a rapid configuration on the basis of a small number of reference samples and hence a rapid start of the automatic image processing are combined with the powerful methods of non-supervised learning using a sufficiently large statistical basis.

The concept of the invention will be described with reference to illustrations below by way of example on the basis of the configuration of an intelligent greyscale camera with real-time extraction of geometric primitives for the inspection of perforated stampings. In this case:
- Figure 1: shows a greyscale image scene with three flat sheet-metal parts,
- Figure 2: shows the geometric primitives straight line 21 and full circle 22 using the example of the part 11, which geometric primitives are superposed from said image scene and are calculated by the real-time processor,
- Figure 3: shows an image scene with two overlapping reference objects,
- Figure 4: shows the graphical primitives calculated from the image shown in Figure 3,
- Figure 5: shows the vectors selected manually on the basis of the semantic knowledge of the user, the vectors produced owing to the overlap of two sheet-metal parts to be inspected having been deleted,
- Figures 6A-6L: schematically show the creation of a model of the object to be recognized on the basis of graphical primitives from a plurality of individual images, an overview of the scene being illustrated on the left, the selection of all the undisturbed edges being illustrated in the central image, and the previously calculated model being illustrated in the right-hand image.
- Figure 7A: shows an image of two objects recorded by the image processing system,
- Figures 7B-7E: show, on the basis of screen representations of geometric primitives, the possibility of selecting contiguous graphical primitives on the basis of an automatically generated proposal, and
- Figure 8: schematically shows two oppositely directed rating functions, one decreasing with regard to the original feature vectors manually rated by the user, and one increasing with regard to those rated by the image processing system in the course of progressive production and the statistical basis which thus becomes increasingly more significant, by means of non-supervised learning.

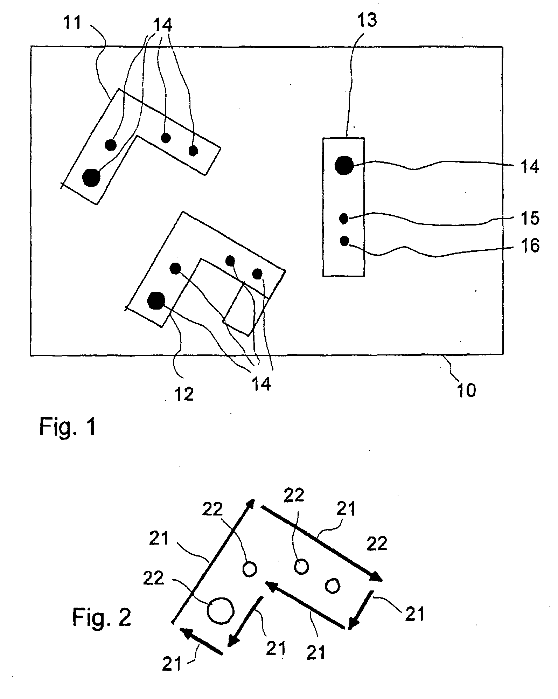

Figure 1 illustrates a greyscale image 10 such as can be recorded by means of a camera of an image processing system according to the invention. Three flat sheet-metal stampings 11, 12 and 13 having holes 14 of different sizes are recorded in the image. For technical printing reasons, the greyscale image is represented as a line original purely in black/white, that is to say that the different grey shades of the parts and of the background are not represented. The objects 11, 12, 13 not only have a series of holes 14 having different diameters, they also differ in their form, or their contour. The sheet-metal stamping 13 additionally has even smaller stamped openings 15, 16.

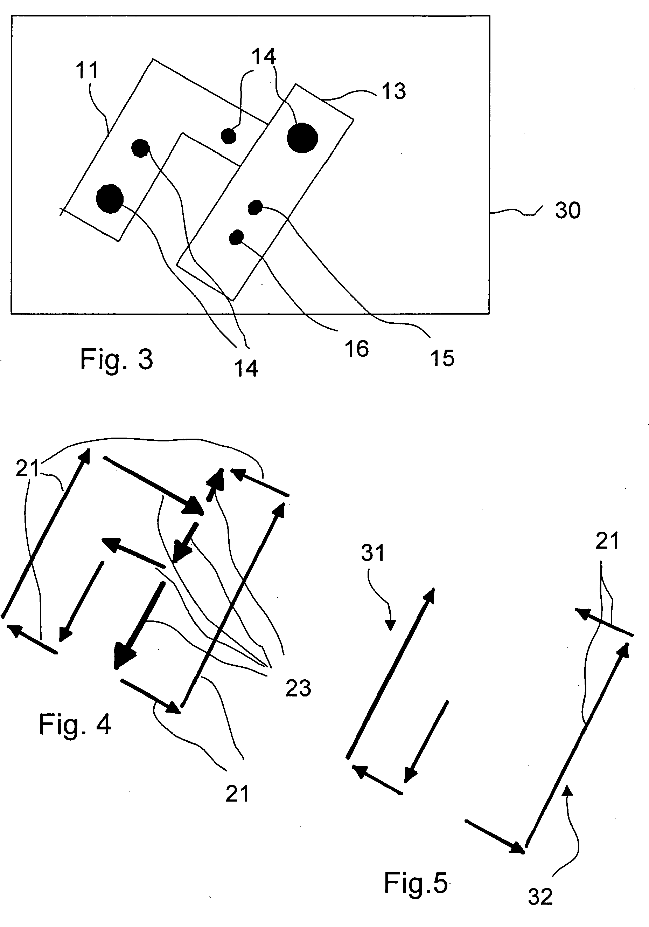

The real-time processor of the image processing system determines geometric primitives, such as vectorized straight line segments, circle arcs or circles, from the image information, as shown in Figure 2. In the example shown in Figure 2, the image processing system has determined by way of example the geometric primitives "vectorized straight line segments" 21, here represented graphically as vectors, and "circles" 22. These are superposed on the greyscale image in visually contrasting fashion on the graphical interface in accordance with the invention, so that the user can concentrate on this technical-geometric abstraction. In the case of the example explained above, therefore, Figures 1 and 2 are accordingly represented in superposed fashion on the user interface in order to make it easier for the user to assign the primitives to the object. In this case, the camera image of the objects may be represented in attenuated fashion relative to the superposed geometric primitives on the graphical interface. It is advantageous if the user can also set the degree of attenuation.

In accordance with the invention, the user, on the graphical user interface of the image processing system, can select and delete the geometric primitives which appear "weak" to him manually by means of an input device such as a computer mouse, a trackball, a digitizing pen or the like or by means of a touch panel, in order to prevent fundamentally unstable features from being used during the segmentation and classification of the objects by the image computer.

In the example of Figure 1, these shall be for example the small openings 15 and 16 of the object 13, since the user thinking in technical-graphical terms knows on account of his semantic knowledge about the function of these holes:
the coarsely stamped holes serve as retention for a spring clip and therefore have only a very imprecise circular shape and position since these two properties are not required with high accuracy for the technical function. Therefore, the circles extracted by the real-time processor are neither precisely positioned, nor have a precise diameter nor have a precise circular shape. The features formed therefrom for the position-invariant identification of these parts, for the calculation of their position in the image field, etc. are therefore greatly fluctuating features and are therefore not very robust and not very useful.

The user can impart this prior knowledge or semantic understanding of the image processing scene "small holes for the retention of a spring produce unstable circles" directly to the image computer e.g. by manually deleting these features on the graphical interface or else providing them with only a low rating. He can do this even with only a single reference object. In the case of an automatic analysis, on account of the variances of the extracted geometric primitives, numerous identical reference objects would have to be learned in order to enable the image computer to arrive at the same insight from statistics with a sufficient sample size. This - in accordance with the invention - manual deletion or rating of unstable features by the user with only a very basic technical knowledge makes it possible to train the image processing system on the basis of only a small number of reference objects.

Figure 3, Figure 4 and Figure 5 illustrate another example of the value of the invention's possibility of inputting the semantic knowledge of the user, namely learning that tolerates overlaps. In this case, Figure 3 shows an image scene 30 with two reference objects 31, 32 that overlap. Figure 4 shows the graphic primitives 21, 23 in the form of vectorized straight lines which are calculated from the image shown in Figure 3. These are represented as arrows in a manner similar to Figure 2 and are visualized on the graphical user interface. In this case, for clarification, the vectors 23 generated incorrectly as a result of the overlap of the two objects 31, 33 are represented in bold.

The user immediately sees that, owing to the overlap, these vectors 23 depicted in bold in Figure 4 are incorrect and have been produced only on account of the overlap; on account of his merely geometric-graphical technical knowledge, he knows a priori that these vectors should therefore not be used as geometric primitives describing the object.

In accordance with the invention, by means of an input device, he can then impart this semantic knowledge to the image computer by e.g. manually deleting these five vectors 23. There then remain, as shown in Figure 5, two objects 31 and 32 each having one or more vectorized straight line segments 21, in which case although the objects 31, 32 no longer demonstrate all the features of the originals, in return they do not demonstrate any incorrect features either. Therefore, the image computer is thereupon in a significantly better position to calculate classifiers with this admittedly reduced set of features, but in return robust features.

A further concept of the invention is that the user, by means of the input device, cannot just selectively delete or deselect geometric primitives, but can also assign a rating thereto. For this purpose, the user can allocate to the geometric primitives weight factors, for example, with which they are included in the calculation of the classifiers for the segmentation. This means that the user, on account of his semantic knowledge, can still permit weak geometric primitives, but with a correspondingly lower weight in comparison with strong primitives. In this case, the user, by means of an input device, in each case manually provides one or more geometric primitives with a weight factor individually or in combination in the images of these reference objects, and in that, from the geometric primitives weighted in this way, the image computer automatically calculates classifiers for the segmentation of the objects against the background and also for the mutual segmentation of the objects among one another by an image processing computer.

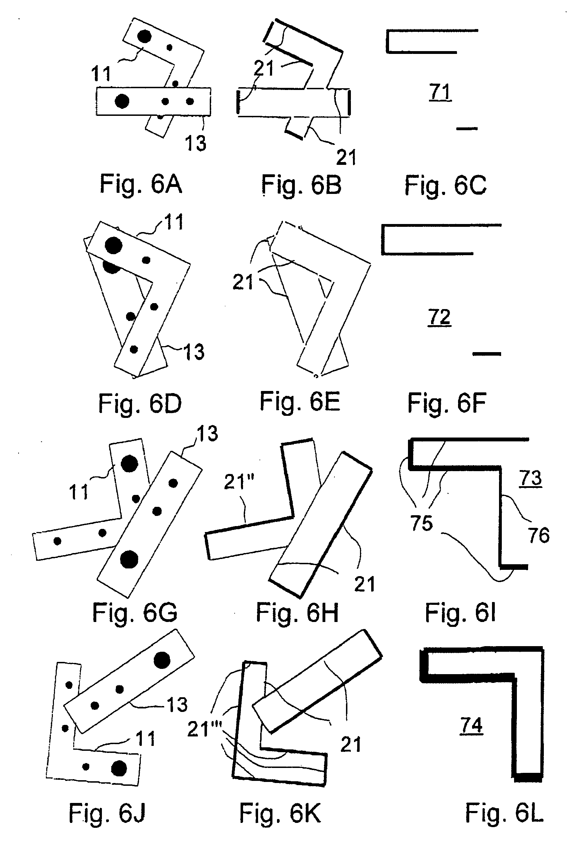

An explanation is given, with reference to Figures 6A to 6L, of a development of the invention in which the user can select or deselect geometric primitives from a plurality of different images with reference objects with the aid of an input device, deselected primitives subsequently being excluded from their use as features for the segmentation of images by the image processing system or selected primitives subsequently being used as features for the segmentation of images by the image processing system. In this case, with the aid of an input device, the user can individually delete or deselect, inter alia from images with reference objects that overlap and/or obscure one another, incorrect geometric primitives which are not associated with a specific reference object, but rather arise only on account of the mutual overlapping of the reference objects, and can thus exclude them from their use as features for the segmentation. Only the selected or non-deleted primitives are then used further for creating a model of the object.

In this case, the objects found are verified by means of a small image series in order to increase the relevance of the features there and to supplement the set of features. This is illustrated on the basis of the four exemplary images shown in Figures 6A, 6D, 6G and 6J: situated in all the images are the two objects 11 and 13, as are also shown in Figure 1, overlapping differently in each case. In each image, the user can select the relevant and undisturbed primitives and add these to the individual models of the objects. The geometric primitives 21 found independently by the image processing system with respect to the images of Figures 6A, 6D, 6G and 6J are respectively illustrated in Figures 6B, 6E, 6H and 6K. The relevant and undisturbed primitives are represented by bolder lines and designated in each case by 21'. From these primitives, the user selects those which are associated with the object 11. These selected primitives are then joined together to form a model by the image processing system.

In the case of the method explained with reference to exemplary Figures 6A to 6L, the user is in this case shown successively the images - recorded by the camera - from Figures 6A, 6D, 6G and 6J with the primitives 21 found and the models 71, 72, 73 and 74 as shown in Figures 6C, 6F, 6I and 6L are created from the selection of primitives 71'. In this case, firstly the model 71 is created from the image from Figure 6A. In this case, the further models 72, 73 and 74 are calculated by supplementing the images progressively shown to the user in accordance with Figures 6D, 6G and 6J by further selected primitives 21'. The model 71 in accordance with Figure 6C that has already been obtained from the processing of the image from Figure 6A is in this case also applied to the subsequent recording in accordance with Figure 6D, the model 71 determining the object 11 and the position thereof in the image, or the orientation and position of the primitives of the model in the recording.

After evaluation of the first image 6A with the primitives 21, 21' shown in Figure 6B, the model 71 is thus obtained for the object 11, which model is still incomplete. In the second image 6D, the two objects overlap such that there are no undisturbed edges present. In the model 72, therefore, there are no alterations with respect to the model 71. A different situation arises in Figure 6G. The line trace 21" is undisturbed and can thus be added to the model 73 of the object 11. In this case, the primitives 75 acquire a stronger weight because they had already been contained in the model 71, and the edge 76 is newly added to the model 73. The stronger weight of the primitives, or the greater significance thereof, can then also be visualized by the image processing system, for example by effecting a corresponding highlighting in colour and/or a highlighting on the basis of the line width as shown in Figure 6L. In the case of the examples shown in Figures 6F and 6L, more significant line segments are highlighted by wider lines. It is also possible for the inserted geometric primitives calculated from the images of the objects by the real-time processor even to be highlighted in a manner corresponding to the statistical stability derived from the variance of these geometric primitives. A corresponding image processing system in accordance with this embodiment of the invention has for this purpose a device for calculating the statistical stability of extracted geometric shape primitives which is derived from the variance of the geometric primitives. This device may be a suitable software, in particular also a hardware designed in a manner corresponding thereto, such as, for instance, an FPGA.

As a result, the robustness of these geometric primitives and of the features calculated therefrom can be directly recognized visually by the user. By way of example, the stability derived from the variance of these geometric primitives can be represented in a manner coded in colour in a scale. Thus, by way of example, less stable primitives may be represented blue and stabler primitives red. The brightness or line width of the primitives represented may also be adapted in accordance with the calculated stability.

In addition to a colour coding, therefore, the inserted geometric primitives calculated from the images of the objects by the real-time processor are represented with different textures and/or temporally fluctuating modulations of their optical representation and/or different graphical configuration depending on the robustness of the geometric primitives. The representation is expediently chosen such that the level of the stability of the features calculated from these geometric primitives is intuitively discernible to the user from this representation.

From the image of Figure 6J and the representation - generated by the image processing system - of the primitives determined therefrom in accordance with Figure 6K, it is then possible to select further straight line segments 21''' from the set of geometric primitives 21 shown in Figure 6K, so that ultimately the model 74 is calculated for the object 11. Within the model 74, the outer contour of the object is stored in weighted fashion with the probability of presence, so that, building on this model 74, further features can be calculated and measurement tasks can be defined.

The model 74 may also be independently verified and improved in particular by the image processing system. For this purpose, the object model 74 may be automatically verified by an image processor of the image processing system by the image processor calculating, for the object model 74, firstly a measure of the stability of the primitives combined in this object model. By supplying further primitives from recordings of further specimens of the object 11, the total stability of all the primitives combined in an object model can then be altered until it reaches a maximum. In this case, further primitives can be added in particular from the previous and further recordings and the stability of the object model thus obtained can be checked. The object model with the maximum stability can then be represented visually as a reference object and be stored in terms of data.

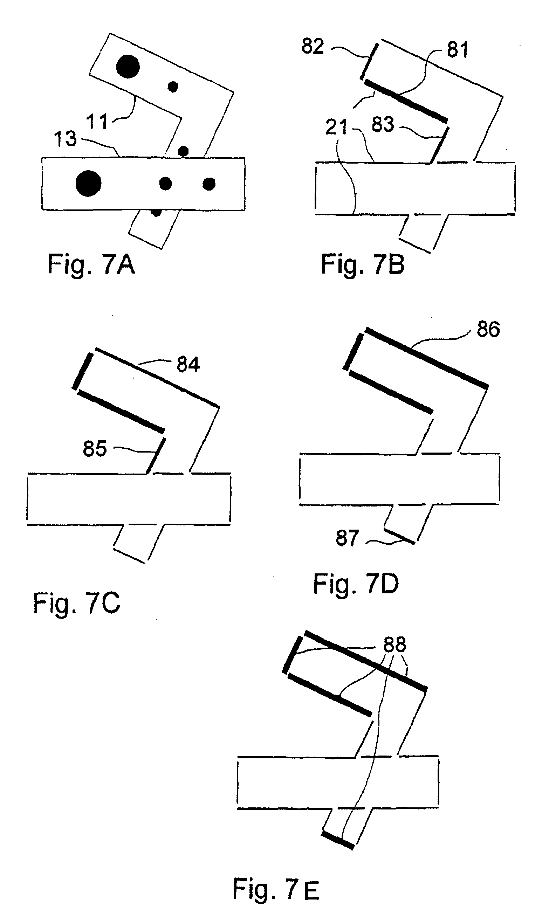

The selection of the relevant contours is illustrated schematically in Figures 7A to 7E. In this case, during the manual selection of geometric primitives, various proposals for primitives which are additionally to be selected, which proposals are stored in a database and/or calculated from the previous manual selection, are generated and displayed for the user by the image processor, and are either accepted or rejected after a manual confirmation. For this purpose, the user is assisted by the image computer, which, by means of a classifier, provides proposals for the selection which can then be confirmed using simple means. Said classifier may be e.g. a neighbourhood processor which detects contiguous graphical primitives and thus enables the user to conveniently select adjacent primitives. Let us assume that the user would like to select the object 11 in the image from Figure 7A recorded by the image processing system. For this purpose, in the representation from Figure 7B generated by the image processing system, he selects a graphical primitive 81 from the set of primitives 21 found and then receives, on account of the calculation of the classifier of the image processing system, the proposals for further primitives 82 and 83 which are related to the primitive 81. The primitives respectively proposed, that is to say the line segments 82 and 83 in this example, are highlighted by the image processing system in a manner that is discernible to the user, for example by highlighting in colour or a larger line width.

The user confirms the proposal for the object 82, but not for the primitive 83, since the latter represents a contour line of the object 11 that is partly concealed by the further object 13. The neighbours of the previously selected objects are presented to the user in respect of the selection and he can then select from the further proposals for primitives 84 and 85 from Figure 7C. With this method, using simple means he can select all undisturbed or correct graphical primitives which are associated with the object 11 and he thus obtains the selection from Figure 7D with a group 86 of selected line segments. Afterwards, he may also select the line segment 87, which is likewise associated with the object 11 to be detected but is not connected with the previously selected primitives. The line segments thus selected form a group 88 of geometric primitives for the model of the object 11 that is to be formed. Since there are now no further undisturbed primitives which could describe the object 11 such as is represented in Figure 7A, the selection in Figure 7E results, which can subsequently be added to the model of the object 11, as described with reference to Figures 6A to 6L.

By transferring the graphical primitives and the features thereof into a graph and by classifying these partial objects according to the known methods of comparison of incomplete graphs, a robust classifier can thus be calculated very rapidly, that is to say with only a small number of reference object images.

Building on the object description thus generated, it is possible, then, to determine further features such as e.g. a system of coordinates referring to the object, which the user can define by selecting a plurality of primitives. By way of example, if two straight lines are selected, these determine the axes of the system of coordinates, the point of intersection determining the coordinate origin. Afterwards, the position of the calculated system of coordinates and/or of measurement variables referring to this system of coordinates can then be inserted automatically, on the basis of the position found for the object model determined by the primitives, visually during the subsequent recordings of the object positionally accurately on the screen, or the graphical user interface represented there, and - for example in the representation of video recordings on the user interface - be tracked. It goes without saying that this is also possible in the case of a plurality of different objects, it then accordingly being possible to insert and track a plurality of models for a plurality of objects on the screen in each case in correspondingly positionally accurate fashion. It is also possible to insert and track a single model for one of the objects.

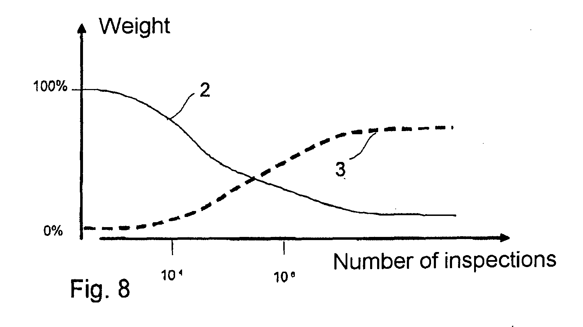

A further concept of the invention consists in combining the advantages of the rapid configuration of a real-time image processing system with an extraction - as described above - of geometric primitives by means of the manual rating of these primitives by the user having knowledge of the function with the advantages of automatic learning on the basis of large, statistically significant learning samples according to the methods of non-supervised learning. This is achieved in accordance with the invention according to Figure 8 by virtue of the fact that as the number of inspected samples increases, that is to say with an increasing statistical basis, the geometric primitives selected and/or rated by the user on the basis of only a small number of samples as explained with reference to the figures above are included with an increasingly smaller weight 2 in the calculation of the classifiers for the recognition of these objects, but that at the same time the classification rules which are determined automatically by the image computer using the methods of non-supervised learning are included with an increasingly rising weight 3, and that, by virtue of these oppositely directed weightings of the image processing system relative to the initial settings dominated by the user, the information obtained in the course of production about production tolerances, ambient variabilities, etc. is included to an ever greater extent and enables the image processing system to learn subsequently.

To summarize, the essential concept of the invention of this application is that an image processing system, in video real-time, generates geometric shape primitives of the objects to be inspected without the assistance of the user and represents them on the graphical interface to the user who thinks only in geometric-technical terms, so that said user no longer has to think in pixels but rather only in higher-level shape features, and that the user is afforded a technical possibility of imparting his semantic a priori knowledge to the image computer in that he can selectively manually delete or rate different geometric primitives. What is thereby achieved is that, for such a user who thinks only in technical-geometric terms, a few images with reference objects suffice to configure stable and tolerant classifiers for the recognition and inspection of the objects. This constitutes a considerable advantage and economic benefit in comparison with present-day image processing systems.

## Claims

1. Method for the graphical operation of an image processing system for automatic inspection and classification tasks,
in which the image processing system extracts geometric shape primitives from recorded images and represents them in a manner superposed on the camera images of these objects in visually contrasting fashion by a screen,
and the user in each case manually edits, by means of an input device, the selection of geometric shape primitives which to him appears unsuitable or suitable for robust recognition individually or in combination in the images of these reference objects.

2. Method according to Claim 1, in which the image processing system extracts geometric shape primitives which are selected from elements of a group composed of the following elements: vectorized contour straight lines, circle arcs, circles, ellipses and free-form curves.

3. Method according to Claim 1, in which the significance of geometric primitives is visualized.

4. Method according to Claim 1, geometric shape primitives being extracted from the recorded images of the object or objects to be inspected by means of a real-time processor in video real-time.

5. Method according to Claim 1, **characterized in that**, from selected geometric primitives, the image computer automatically calculates classifiers for the segmentation of an object against the background, and also for the mutual segmentation of a plurality of objects among one another by an image processing computer.

6. Method according to Claim 1, **characterized in that** the user, by means of an input device, in each case manually provides the geometric primitives with a weight factor individually or in combination in the images of these reference objects, and **in that**, from the geometric primitives weighted in this way, the image computer automatically calculates classifiers for the segmentation of the objects against the background and also for the mutual segmentation of the objects among one another by an image processing computer.

7. Method according to Claim 1, **characterized in that** the inserted geometric primitives calculated from the images of the objects by the real-time processor are represented in a manner coded in colour in a scale such as corresponds to the statistical stability derived from the variance of these geometric primitives, so that the user can visually recognize the robustness of these geometric primitives and of the features calculated therefrom.

8. Method according to Claim 1, **characterized in that** the inserted geometric primitives calculated from the images of the objects by the real-time processor are represented with different textures and/or temporally fluctuating modulations of their optical representation and/or different graphical configuration depending on the robustness of the geometric primitives.

9. Method according to Claim 1, in which the user can select or deselect geometric primitives from a plurality of different images with reference objects with the aid of an input device, deselected primitives subsequently being excluded from their use as features for the segmentation of images by the image processing system or selected primitives subsequently being used as features for the segmentation of images by the image processing system.

10. Method according to Claim 1, the camera image of the objects being represented in attenuated fashion with respect to the superposed geometric primitives on the graphical interface, and the user being able to set the degree of attenuation.

11. Method according to Claim 1, **characterized in that**, after the acquisition of a reference image, there are superposed on the objects only those geometric primitives which the user has not yet manually deleted in the preceding reference images or has rated sufficiently highly or has selected.

12. Method according to Claim 1, in which the user progressively reinserts the geometric primitives that have already been deleted into the reference image and reverses individual deletions.

13. Method according to Claim 1, **characterized in that**, during the manual selection of geometric primitives, various proposals for primitives which are additionally to be selected, which proposals are stored in a database and/or calculated from the previous manual selection, are generated for the user by the image processor, and are accepted after a manual confirmation.

14. Method according to Claim 1, the total set of all manually selected and/or manually confirmed geometric primitives being combined visually and in terms of data to form a geometric object model.

15. Method according to Claim 14, **characterized in that**, for the definition of a system of coordinates referring to the object model, the user manually selects those primitives which are used for the calculation of the system of coordinates.

16. Method according to Claim 15, **characterized in that** the position of the calculated system of coordinates and/or of measurement variables referring to this system of coordinates is positionally accurately inserted automatically, on the basis of the position found for the object model determined by the primitives, visually during the subsequent recordings of the object, and is tracked.

17. Method for the verification of at least one object model in an image processing system, in particular following a method according to Claim 14, geometric shape primitives being extracted and selected from at least one recorded image, the total set of all selected geometric primitives being combined in terms of data to form a geometric object model, and the object model or object models thus formed being automatically verified by the image processor by virtue of the image processor calculating, for each object model, a measure of the stability of the primitives combined in this object model, in which case, by supplying further primitives from recordings of further specimens of these objects, the total stability of all the primitives combined in an object model is varied until it attains a maximum, and this object model being represented visually as a reference object and being stored in terms of data.

18. Method for the classification and segmentation of objects in an image processing system, in which the image processing system extracts geometric shape primitives from recorded images and represents them in a manner superposed on the camera images of these objects in visually contrasting fashion by a screen,
and the user in each case manually edits, by means of an input device, the selection of geometric shape primitives which to him appears unsuitable or suitable for robust recognition individually or in combination in the images of these reference objects, and a plurality of objects being acquired by the image processing system and, as the number of inspected objects increases, the geometric primitives selected and/or rated by the user being included, with a weight that becomes increasingly smaller as the number of inspections carried out independently increases, in the calculation of classifiers for the recognition of the objects to be inspected, and, simultaneously with the methods of non-supervised learning, the image computer automatically determining classification rules and the latter being included, with a weight that increasingly rises as the number of inspections carried out increases, in the calculation of the classifiers for the recognition of the objects to be inspected, and the classification and segmentation of the objects being carried out by the superposition of the two classifiers.

19. Image processing system for automatic inspection and classification tasks, comprising an image recording device, a graphical user interface and an input device for user inputs, the image processing system being set up to extract geometric shape primitives from recorded images and to represent them in a manner superposed on the camera images of these objects in visually contrasting fashion on the graphical user interface, and, by means of the graphical user interface, the user being able to manually edit geometric shape primitives individually or in combination in the images of these reference objects.

20. Image processing system according to Claim 19, set up for the extraction of geometric shape primitives which are selected from elements of a group composed of the following elements: vectorized contour straight lines, circle arcs, circles, ellipses and free-form curves.

21. Image processing system according to Claim 19, set up for the visualization of the significance of geometric primitives on the graphical user interface.

22. Image processing system according to Claim 19, having a processor for the extraction of geometric shape primitives from recorded images in video real-time.

23. Image processing system according to Claim 19, **characterized by** an image processing computer for the calculation of classifiers for the segmentation of an object against the background, and also for the mutual segmentation of a plurality of objects among one another from selected geometric primitives.

24. Image processing system according to Claim 19, **characterized in that** the graphical user interface is set up for the user, by means of the input device, to manually provide the geometric primitives with a weight factor individually or in combination in the images of these reference objects.

25. Image processing system according to Claim 24, **characterized by** an image processing computer which is set up for the calculation of classifiers for the segmentation of the objects from the background, and also for the mutual segmentation of the objects among one another from the geometric primitives weighted with the weight factor.

26. Image processing system according to Claim 19, **characterized by** a device for calculating the statistical stability of extracted geometric shape primitives, said stability being derived from the variance of the geometric primitives.

27. Image processing system according to Claim 19, set up for the visual combination and combination in terms of data of all manually selected and/or manually confirmed geometric primitives to form a geometric object model.

28. Image processing system according to Claim 27, set up for calculating a system of coordinates referring to the object model on the basis of primitives selected by a user.

29. Image processing system according to Claim 28, set up for the automatic insertion and positionally accurate tracking of the position of the calculated system of coordinates and/or of measurement variables referring to this system of coordinates on the basis of the position found for the object model determined by the primitives.

30. Image processing system for automatic inspection and classification tasks, set up for carrying out the method according to Claim 17.

31. Image processing system for automatic inspection and classification tasks, set up for carrying out the method according to Claim 18.
